# EUROPÄISCHE PATENTSCHRIFT

(11) **EP 1 769 117 B1**
(45) Veröffentlichungstag und Bekanntmachung des Hinweises auf die Patenterteilung: **22.04.2009**
(21) Anmeldenummer: 05755548.4
(22) Anmeldetag: 28.06.2005
(51) Int. Cl.: D06M 11/46, C08K 3/00, C08K 3/22, C08K 3/26, C08K 9/04, C08K 3/30, C08K 3/32, C08K 3/34

(54) **POLYMERE WERKSTOFFE, DIE ANORGANISCHE FESTSTOFFE ENTHALTEN UND VERFAHREN ZU DEREN HERSTELLUNG**
POLYMERIC MATERIALS, WHICH CONTAIN INORGANIC SOLIDS, AND METHODS FOR THE PRODUCTION THEREOF
MATERIAUX POLYMERES CONTENANT DES SOLIDES INORGANIQUES ET PROCEDE PERMETTANT DE LES PRODUIRE

(30) Priorität: 29.06.2004 DE 102004031283
(43) Veröffentlichungstag der Anmeldung: 04.04.2007
(73) Patentinhaber: Sachtleben Chemie GmbH, 47198 Duisburg (DE)
(72) Erfinder: BECKER, Bernhard, 47809 Krefeld (DE); KASTNER, Jürgen, 44803 Bochum (DE); MEYERS, Franz, Charlotte, North Carolina 28277 (US); SCHELLEN, Ralf, 47445 Moers (DE); SCHULTE, Heiner, 59494 Soest (DE); WEDLER, Michael, 47119 Duisburg (DE)
(74) Vertreter: Uppena, Franz
(86) Internationale Anmeldenummer: PCT/EP2005/006947
(87) Internationale Veröffentlichungsnummer: WO 2006/000454

(56) Entgegenhaltungen:
- DD-A1- 273 843
- FR-A- 1 447 652
- GB-A- 1 112 616
- US-A- 3 547 882

## Beschreibung

Die Erfindung betrifft polymere Werkstoffe, insbesondere Synthesefasern, die anorganische Feststoffe enthalten, sowie ein Verfahren zu deren Herstellung.

Synthesefasern sind polymere Werkstoffe. Synthesefasern mit hohen TiO₂-Gehalten sind insbesondere bekannt als Fulldull- (Tiefmatt)-Fasern, die bis zu 3 Gew.- % TiO₂ (Titandioxid) enthalten.

Hohe TiO₂-Gehalte in Synthesefasern führen zu einer besonders ausgeprägten Mattierungswirkung, die sich sowohl visuell als auch haptisch (textiler Griff) wahrnehmen lässt. Diese Gestaltung von Synthesefasern ist oftmals erwünscht, um den Synthesefasern ein stark baumwollähnliches Erscheinungsbild (cotton-like) zu verleihen. Zudem weisen aus derart gestalteten Fulldull-Fasern hergestellte textile Flächen eine besonders hohe Undurchlässigkeit für UV-Strahlung auf.

Fulldull-Fasern haben eine Reihe von Nachteilen. So treten bei Fulldull-Fasern während der Verarbeitung deutlich ausgeprägte Abrasionserscheinungen auf. Insbesondere beim Kontakt der Fasern mit den Konstruktionsteilen der Verarbeitungsmaschinen (wie Fadenleitorganen, Wicklerrollen, Texturierscheiben, Nadeln etc.) sind diese Abrasionserscheinungen zu beobachten. Solche Abrasionserscheinungen treten z. B. bei Semidull-Fasern mit ca. um den Faktor 5 niedrigeren TiO₂-Gehalten in viel geringerem Maße auf.

Auch in Semidull-Systemen kann der Anteil an TiO₂ zu Nachteilen führen. Alle herkömmlichen Titandioxide, die als Mattierungsmittel eingesetzt werden, absorbieren über ihre Halbleitereigenschaft UV-Strahlung, die über Prozesse im Titandioxid-Kristall letztlich zu Radikalbildung an der Grenzfläche Titandixid-Kristall-Polymer führen. Dies kann grundsätzlich zu unerwünschten partiellen Abbaureaktionen, einhergehend mit Veränderungen der Polymerfarbe ("Vergilbung") führen.

Aus der DD 273 843 ist es bekannt, in einem Hochpolymer den Gehalt an TiO₂ zu senken und beispielsweise BaSO₄ zuzugeben, wobei bei der Mattierungsmittelkombination aus BaSO₄ und TiO₂ der Gehalt an BaSO₄ größer als 80 % und der Gehalt an TiO₂ kleiner als 20 % sein soll.

Aufgabe der Erfindung ist es, die Nachteile des Standes der Technik zu überwinden und TiO₂-enthaltende polymere Werkstoffe zu schaffen, die die üblicherweise durch hohe TiO₂-Gehalte bewirkten gewünschten Eigenschaften aufweisen, und bei denen gleichzeitig deutlich geringere Abrasionserscheinungen auftreten. Insbesondere sollen Synthesefasern geschaffen werden, bei denen im Vergleich zu bekannten Fulldull-Fasern deutlich geringere Abrasionserscheinungen auftreten.

Gelöst wird die Aufgabe durch TiO₂-enthaltende Werkstoffe, bei denen ein Teil des TiO₂-Gehaltes durch partikelförmige, anorganische Stoffe ersetzt ist, wobei die anorganischen Stoffe eine geringere Kristallhärte als Anatas aufweisen.

Überraschend wurde gefunden, dass zum Erzielen der charakteristischen optischen und haptischen Eigenschaften nicht ausschließlich ein hoher Füllgrad des unter anderem als Mattierungsmittel wirkenden TiO₂ erforderlich ist. Vielmehr lassen sich die gewünschten Effekte schon mit geringeren Anteilen an partikelförmigem TiO₂ und Kompensation der TiO₂-Mindermenge durch andere partikelförmige, anorganische Stoffe erreichen. Diese erfindungsgemäß einsetzbaren anorganischen Partikel sind von ähnlicher Größe wie das jeweils eingesetzte TiO₂. Die erfindungsgemäß ausgewählten partikelförmigen, anorganischen Stoffe haben in der Regel kein so signifikantes Lichtstreuvermögen wie TiO₂ und führen aufgrund ihrer geringeren Kristallhärte zu einer deutlich geringeren Abrasivität des polymeren Werkstoffes. Trotz der reduzierten TiO₂-Menge bleiben die gewünschten Werkstoffeigenschaften wie Tiefmatt-Optik und stumpfer Griff durch den Oberflächenstruktur gebenden hohen Feststoffgehalt überraschenderweise weitgehend oder vollständig erhalten.

Überraschenderweise ist auch bei Semidull-Systemen der erfindungsgemäß vorgesehene Teilersatz des Titandioxids durch die erfindungsgemäß ausgewählten partikelförmigen, anorganischen Stoffe vorteilhaft. Alle herkömmlichen Titandioxide, die als Pigment bzw. wie in der vorliegenden Erfindung als Mattierungsmittel eingesetzt werden, absorbieren, wie weiter oben bereist ausgeführt, über ihre Halbleitereigenschaft UV-Strahlung, die über Prozesse im Titandioxid-Kristall letztlich zu Radikalbildung an der Grenzfläche Titandixid-Kristall-Polymer führen. Dies kann grundsätzlich zu unerwünschten partiellen Abbaureaktionen, einhergehend mit Veränderungen der Polymerfarbe ("Vergilbung") führen. Die erfindungsgemäß ausgewählten partikelförmigen, anorganischen Stoffe hingegen weisen diese Eigenschaft in gar keiner Weise auf. Eine Verringerung des absoluten Füllgrads an TiO₂ und Kompensation durch die erfindungsgemäss ausgewählten partikelförmigen, anorganischen Stoffe, besonders bevorzugt durch das erfindungsemäß ausgewählte BaSO₄, um letztlich zum erwünschten Mattierungsgrad zu gelangen, verringert somit das Potential für die genannten Abbaureaktionen im Vergleich zum ausschließlich mit TiO₂ mattierten Polymer.

Der polymere Werkstoff wird bevorzugt ausgewählt aus Polyester (wie Polyethylenterephthalat (PET), Polytrimethylenterephthalat (PTT), Polylactid (PLA)), Polyamide (wie PA-6 oder PA-6,6), Polyolefine (wie Polyethylen (PE) oder Polypropylen (PP)), Polyacrylnitrile (PAN), Viskose (CV) oder Celluloseacetat (CA).

Die Form des erfindungsgemäßen polymeren Werkstoffes ist nicht auf eine bestimmte Ausführung beschränkt. Bevorzugt liegt der erfindungsgemäße polymere Werkstoff in Form von Synthesefasern (wie Filamente, Stapel- oder Flockfasern) vor. Der polymere Werkstoff kann auch in Form von Filmen oder Formteilen vorliegen.

Erfindungsgemäß können als partikelförmige, anorganische Stoffe bevorzugt eingesetzt werden: BaSO₄ (unbehandelt oder beschichtet), ZnS, Carbonate (wie z.B. Kreide oder Dolomit), Phosphate, Siliziumdioxide oder Silikate (wie Talkum, Kaolin, Glimmer).

Bevorzugt liegt der Feststoffgehalt der erfindungsgemäßen Additivmischungen (Summe aus TiO₂ und erfindungsgemäß ausgewähltem partikelförmigem, anorganischem Stoff) im polymeren Werkstoff im Bereich von 0,1 bis 20 Gew.-%, besonders bevorzugt im Bereich von 0,1 bis 10 Gew.-%. Beim Anwendungsgebiet Synthesefasern liegt der Feststoffgehalt im Bereich von 0,1 bis 5 Gew.-%, bevorzugt im Bereich von 0,15 bis 0,5 Gew.-% oder im Bereich von 0,5 bis 3 Gew.-%. Beim Anwendungsgebiet polymerer Film liegt der Feststoffgehalt im Bereich von 0,1 bis 20 Gew.-%, bevorzugt im Bereich von 0,1 bis 8 Gew.-% und ganz besonders bevorzugt im Bereich von 0,4 bis 5 Gew.-%.

Grundsätzlich kann in dem erfindungsgemäßen Additiv der Anteil an erfindungsgemäß ausgewähltem partikelförmigem, anorganischem Stoff bis etwa 80 Gew.-% ausmachen. Damit ist gewährleistet, dass selbst bei hohen Füllgraden das Material mit hohem Streuvermögen, das TiO₂, mit einem Anteil von etwa 20 Gew.-% in dem erfindungsgemäßen Additiv noch ausreichend hoch ist. Bei einem Anteil an erfindungsgemäß ausgewähltem partikelförmigem, anorganischem Stoff von mehr als 80 Gew.-% würde der lichtstreuende Anteil so gering werden, dass die gewünschte Mattierung nicht mehr zu erzielen wäre. Das Gewichtsverhältnis von TiO₂ zum erfindungsgemäß ausgewählten partikelförmigen, anorganischen Stoff in den erfindungsgemäßen Additivmischungen liegt bevorzugt in einem Bereich von 20 bis 95 Gew.-% für TiO₂ und 5 bis 80 Gew.-% für den erfindungsgemäß ausgewählten partikelförmigen, anorganischen Stoff, beispielsweise bei 50 Gew.-% TiO₂ und 50 Gew.-% oder bei 33 Gew.-% TiO₂ und 67 Gew.-% oder bei 25 Gew.-% TiO₂ und 75 Gew.-% erfindungsgemäß ausgewähltem partikelförmigem, anorganischem Stoff.

Hergestellt werden können die erfindungsgemäßen polymeren Werkstoffe in an sich bekannter Weise, wobei anstatt des bisher reinen partikelförmigen Pigments TiO₂ das erfindungsgemäße Additiv aus TiO₂ und dem erfindungsgemäß ausgewählten partikelförmigen, anorganischen "Ersatzstoff' eingesetzt wird. Die Zugabe des erfindungsgemäßen Additivs oder des Pigments TiO₂ und dem anorganischen "Ersatzstoff' kann in bekannter Weise vor, während oder nach der Polymerisationsreaktion erfolgen. Auch möglich ist die Zugabe des erfindungsgemäßen Additivs oder der Einzelkomponenten TiO₂ und dem anorganischen "Ersatzstoff' zu den Ausgangsverbindungen des polymeren Stoffs.

Das Additiv oder die Einzelkomponenten werden dem Polymerherstellprozess bevorzugt als ausdispergierte Suspension zugegeben. Die Zugabe zum Polymerstrom als sogenannter Masterbatch oder als in der Schmelze leicht zu verteilende Präparation (z.B. Mischung aus anorganischen Stoffen in einer Trägersubstanz) erfolgt zweckmäßigerweise dann, wenn die Stoffe den Polymerisationsprozess chemisch nicht überstehen würden (z.B. ZnS in PET) oder der Polymerprozess keine Zugabe während der Polymerisation erlaubt (z.B. PE oder PP).

Verwendung findet der erfindungsgemäße polymere Werkstoff z.B. bei der Herstellung von textilen Flächen z.B. für Bekleidungs- oder Heimtextilien. Eine weitere Verwendung ist z.B. die Herstellung von polymeren Filmen und Folien (z.B. für Verpackungs- oder Druckanwendungen) aus dem erfindungsgemäßen polymeren Werkstoff.

Die nachfolgenden Beispiele sollen die Erfindung näher erläutern, ohne sie einzuschränken:

### Beispiel 1: Herstellung des in der Polykondensation verwendeten Additives:

Die Herstellung des verwendeten Additivs (Fulldull-Additiv) geht auf die in der technischen Literatur hinlänglich beschriebene Technologie zur Darstellung von Titandioxid in der Anatasmodifikation über das Sulfatverfahren zurück. Die Verfahrensschritte Aufschluss - Reinigung - Hydrolyse zur Metatitansäure - Kalzination der Metatitansäure zum Titandioxid werden in gewohnter Weise durchlaufen. Nach der Kalzination wurde eine homogene Verteilung eines weiteren, eine deutlich geringere Kristallhärte als Anatas aufweisenden anorganischen Stoffes im Titandioxid vorgenommen. Hierzu wurden 15 kg kalziniertes Titandioxid in 60 kg Wasser dispergiert. In dieser Suspension erfolgte anschließend direkt die Ausfällung von Bariumsulfat: Zu 60 kg der Titandioxid-Suspension (20 Gew.-% TiO₂, entspricht 12 kg TiO₂) wurden aus Vorratsbehältern mittels Schlauchpumpen parallel 130,6 kg wässrige Bariumsulfid-Lösung (10 Gew.-% BaS; entspricht 13,1 kg BaS) und 112 kg wässrige Natriumsulfat-Lösung (10 Gew.-% Na₂SO₄, entspricht 11,2 kg Na₂SO₄ und damit einem Überschuß von 2 % an Sulfat-Ionen zur Gewährleistung der vollständigen Ausfällung der Bariumionen) über einen Zeitraum von 4 Stunden zugeführt. Während der gesamten Zeit wurde das Reaktionsgemisch gerührt und anschließend für weitere 3 Stunden auf ca. 70°C aufgeheizt und für 3 Stunden bei dieser Temperatur gehalten. Danach wurde die noch warme Suspension über eine Filternutsche abfiltriert, der Filterkuchen mit 200 l de-ionisiertem Wasser gewaschen und anschließend im Trockenschrank getrocknet. Der getrocknete Feststoff wurde grob vorzerkleinert und abschließend mittels einer Feinprall-Mahlung mikronisiert. Durch Verluste in den Aufarbeitungsschritten verblieben ca. 22 kg Additiv, welches aus 33 % TiO₂ und 67 % BaSO₄ bestand.

15 kg dieses anorganischen Additivs wurden in 15 kg Monoethylenglykol (MEG) durch Mahlen in einer Rührwerkskugelmühle intensiv dispergiert. Die erhaltene Suspension wurde mit weiterem Monoethylenglykol auf einen Feststoffgehalt von 20 Gew.-% verdünnt.

### Beispiel 2: Herstellung von Polyester-Granulat mit hohem Füllgrad an Fulldull-Additiv

Die Herstellung von Polyester-Granulat mit hohem Füllgrad an Full-dull-Additiv wurde wie nachstehend beschrieben in bekannter Weise durchgeführt. In einen Batch-Reaktor (ca. 50 l Volumen) wurden 6,8 kg Polyester-Vorkondensat (BHET der Firma Aldrich) und 1,1 kg Monoethylenglykol vorgelegt und aufgeschmolzen. Nach ca. 1 Stunde wurde in den Behälter eine Paste aus 16,7 kg Terephthalsäure und 5,4 kg Monoethylenglykol eingespeist. Die Veresterung erfolgte in bekannter Weise über einen Zeitraum von ungefähr 160 Minuten, wobei die Temperatur des Reaktionsgemisches ca. 280 °C erreichte. Der Endpunkt der Veresterungsreaktion wurde durch das Ende der Wasserabspaltung definiert.

Dann erfolgte die Zugabe von 2,78 kg der in Beispiel 1 hergestellten der Fulldull-Additiv-Suspension (enthielt 20 Gew.-% Feststoff in Monoethylenglykol) zum Reaktionsgemisch. Das System wurde zur vollständigen Durchmischung noch 20 Minuten bei 250 bis 270 °C unter Rühren gehalten, mit 5,86 g Sb₂O₃ in Form einer 10 %-igen Suspension in Monoethylenglykol als Polykondensationskatalysator (entspricht 300 ppm bezogen auf Terephthalsäure) versetzt, weitere 10 Minuten gerührt und dann in den Polykondensationsreaktor überführt.

Die anschließende Durchführung der Polykondensation erfolgte in bekannter Weise unter Druckverminderung bis 2 mbar Enddruck, einer Temperatur des Reaktionsgemischs von 285 bis 290 °C über eine Zeit von ca. 100 Minuten. Als Kriterium für das Ende der Reaktion (Erreichen einer intrinsischen Viskosität von 0.63 dl/g, bestimmt an einer Lösung von 0,5 g PET-Granulat in 100 ml Phenol: 1,2-Dichlorphenol-Gemisch; Gewichtsverhältnis 3:2) wurde die Zunahme des Drehmoments am Rührer bis zu dem dieser Viskosität entsprechenden Wert verfolgt. Danach erfolgte das Auspressen der Schmelze aus dem Reaktor mit Stickstoffüberdruck, Kühlung und Granulierung des Polymerstranges.

Das erhaltene Granulat enthielt 2 Gew.-% des Fulldull-Additivs (bestimmt durch Ermittlung des Veraschungsrückstandes) und war mit der erreichten intrinsischen Viskosität von 0,62 bis 0,65 dl/g für die Verspinnung zu textilen Filamenten geeignet.

### Beispiel 3: Herstellung von Fulldull-Filamenten mit verminderter Abrasion

Die Herstellung der erfindungsgemäßen Full-dull-Filamente erfolgte in einfacher und bekannter Weise über das Schmelzspinnverfahren.

### Überprüfung der Anfärbbarkeit

Die erfindungsgemäß bereitgestellten Systeme wurden hinsichtlich ihrer Anfärbbarkeit überprüft, ein für den Fachmann übliches Verfahren zur Einschätzung der Qualität eines Fulldull- und / oder Semidull-Systems.

Verglichen wurden dabei Synthesefasern, die mit 0,33 % Ti02 bzw. mit einem erfindungsgemäß vorgesehenen Additiv in gleicher Konzentration hergestellt wurden:
- Herstellung von Polyester-Granulat unter Verwendung einer Suspension eines erfindungsgemässen Mattierungsmittel-Gemischs (TiO₂ : BaSO₄ wie 1:1) in einem 35 I-Batch Autoklav in bekannter Weise (Rezeptur, Verfahrensparameter, Reaktionsverlauf usw.)
- Verspinnung dieses Granulats zu einem Standard teilverstreckten Garn (sogen. POY, 67 f 13) mit einer Spinngeschwindigkeit von 3200 m/min
- anschliessend Verstreckung des POY zu voll-verstrecktem Garn FDY (Streckverhältnis 1:1,6); POY und FDY wurden charakterisiert über die Titer-Bestimmung sowie Messung des Kraft-Dehnungsverhaltens (Dehnung und Reissfestigkeit)
- daraus Herstellung von Strickschläuchen auf einer Rundstrickmaschine
- Anfärbung der Strickschläuche mit je einem handelsüblichen Rot- und Blau-Dispersionsfarbstoff mit unterschiedlicher Diffusionscharakteristik (rot: schnell; blau: langsam); Färbung durchgeführt bei 2 Temperaturen (100 und 130°C)
- Die gefärbten Strickschläuche wurden farbmetrisch untersucht: K/S-Werte, L*a*b*-Werte

Dabei zeigten sich überraschenderweise keinerlei signifikante Unterschiede der Werte, obwohl dies angesichts der Unterschiedlichkeit der eingesetzten Mattierungsmittel nicht überrascht hätte.

## Patentansprüche

1. Polymerer Werkstoff, **dadurch gekennzeichnet, dass** er partikelförmiges TiO₂ und zusätzlich mindestens einen weiteren partikelförmigen, anorganischen Stoff enthält, wobei dieser partikelförmige, anorganische Stoff eine geringere Kristallhärte als TiO₂ in der Anatas-Modifikation aufweist und die anorganischen Partikel von ähnlicher Größe wie das eingesetzte TiO₂ sind und wobei der Anteil an partikelförmigem, anorganischem Stoff im Additiv aus TiO₂ und partikelförmigem, anorganischem Stoff bis 80 Gew.-% beträgt.

2. Polymerer Werkstoff nach Anspruch 1, **dadurch gekennzeichnet, dass** der partikelförmige, anorganische Stoffe aus BaSO₄, ZnS, Carbonaten, Phosphaten, Siliziumdioxid oder Silikaten oder aus Mischungen dieser Stoffe ausgewählt ist.

3. Polymerer Werkstoff nach Anspruch 1 oder 2, **dadurch gekennzeichnet, dass** als partikelförmiger, anorganischer Stoff beschichtetes BaSO₄, Kreide oder Dolomit oder Talkum, Kaolin, Glimmer oder Mischungen dieser Stoffe ausgewählt werden.

4. Polymerer Werkstoff nach einem der Ansprüche 1 bis 3, **dadurch gekennzeichnet, dass** der Gehalt an TiO₂ und partikelförmigem, anorganischem Stoff im polymeren Werkstoff im Bereich von 0,1 bis 20 Gew.-%, vorzugsweise im Bereich von 0,1 bis 10 Gew.-% liegt.

5. Polymerer Werkstoff nach einem der Ansprüche 1 bis 4, **dadurch gekennzeichnet, dass** der Gehalt an TiO₂ und partikelförmigem, anorganischem Stoff im polymeren Werkstoff im Bereich von 0,1 bis 5 Gew.-% liegt.

6. Polymerer Werkstoff nach einem der Ansprüche 1 bis 4, **dadurch gekennzeichnet, dass** der Gehalt an TiO₂ und partikelförmigem, anorganischem Stoff im polymeren Werkstoff im Bereich von 0,15 bis 0,5 Gew.-% liegt.

7. Polymerer Werkstoff nach einem der Ansprüche 1 bis 4, **dadurch gekennzeichnet, dass** der Gehalt an TiO₂ und partikelförmigem, anorganischem Stoff im polymeren Werkstoff im Bereich von 0,5 bis 3 Gew.-% liegt.

8. Polymerer Werkstoff nach einem der Ansprüche 1 bis 4, **dadurch gekennzeichnet, dass** der Gehalt an TiO₂ und partikelförmigem, anorganischem Stoff im polymeren Werkstoff im Bereich von 0,1 bis 8 Gew.-% vorzugsweise im Bereich von 0,4 bis 5 Gew.-% liegt.

9. Polymerer Werkstoff nach einem der Ansprüche 1 bis 8, **dadurch gekennzeichnet, dass** das Gewichtsverhältnis von TiO₂ zum partikelförmigen, anorganischen Stoff im Additiv aus TiO₂ und partikelförmigem, anorganischem Stoff in einem Bereich von 20 bis 95 Gew.-% für TiO₂ und 5 bis 80 Gew.-% für den partikelförmigen, anorganischen Stoff liegt.

10. Polymerer Werkstoff nach einem der Ansprüche 1 bis 9, **dadurch gekennzeichnet, dass** das Gewichtsverhältnis von TiO₂ zum partikelförmigen, anorganischen Stoff im Additiv aus TiO₂ und partikelförmigem, anorganischem Stoff bei 50 Gew.-% TiO₂ und 50 Gew.-% partikelförmigem, anorganischem Stoff liegt.

11. Polymerer Werkstoff nach einem der Ansprüche 1 bis 9, **dadurch gekennzeichnet, dass** das Gewichtsverhältnis von TiO₂ zum partikelförmigen, anorganischen Stoff im Additiv aus TiO₂ und partikelförmigem, anorganischem Stoff bei 33 Gew.-% TiO₂ und 67 Gew.-% partikelförmigem, anorganischem Stoff liegt.

12. Polymerer Werkstoff nach einem der Ansprüche 1 bis 9, **dadurch gekennzeichnet, dass** das Gewichtsverhältnis von TiO₂ zum partikelförmigen, anorganischen Stoff im Additiv aus TiO₂ und partikelförmigem, anorganischem Stoff bei 25 Gew.-% TiO₂ und 75 Gew.-% partikelförmigem, anorganischem Stoff liegt.

13. Polymerer Werkstoff nach einem der Ansprüche 1 bis 12, **dadurch gekennzeichnet, dass** der polymere. Werkstoff ausgewählt ist aus Polyester (wie Polyethylenterephthalat (PET), Polytrimethylenterephthalat (PTT), Polylactid (PLA)), Polyamide (wie PA-5 oder PA-6,6), Polyolefine (wie Polyethylen (PE) oder Polypropylen (PP)), Polyacrylnitrile (PAN), Viskose (CV) oder Celluloseacetat (CA).

14. Polymerer Werkstoff nach einem der Ansprüche 1 bis 13, **dadurch gekennzeichnet, dass** der polymere Werkstoff in Form von Synthesefasern vorliegt.

15. Polymerer Werkstoff nach einem der Ansprüche 1 bis 13, **dadurch gekennzeichnet, dass** der polymere Werkstoff in Form von Filmen oder Formteilen vorliegt.

16. Verfahren zur Herstellung eines polymeren Werkstoffes nach einem der Ansprüche 1 bis 16, **dadurch gekennzeichnet, dass** ein Additiv aus TiO₂ und einem partikelförmigen_{;} anorganischen Stoff, der eine geringere Härte als Anatas aufweist und die anorganischen Partikel von ähnlicher Größe wie das eingesetzte TiO₂ sind, oder jeweils einzeln TiO₂ und der anorganische Stoff, der eine geringere Kristallhärte als Anatas aufweist und die anorganischen Partikel von ähnlicher Größe wie das eingesetzte TiO₂ sind, in bekannter Weise vor, während oder nach der Polymerisationsreaktion dem polymeren Stoff, bzw. dessen Ausgangsverbindungen zugegeben wird.

17. Verfahren zur Herstellung eines polymeren Werkstoffes nach einem der Ansprüche 1 bis 16, **dadurch gekennzeichnet, dass** ein Additiv aus TiO₂ und einem partikelförmigen, anorganischen Stoff, der eine geringere Härte als Anatas aufweist, oder jeweils einzeln TiO₂ und der anorganische Stoff, der eine geringere Kristallhärte als Anatas aufweist, in bekannter Weise den Ausgangsverbindungen des polymeren Stoffs zugegeben wird.

18. Additiv, **dadurch gekennzeichnet, dass** es partikelförmiges TiO₂ und mindestens einen weiteren partikelförmigen, anorganischen Stoff enthält, wobei dieser partikelförmige, anorganische Stoff eine geringere Kristallhärte als TiO₂ in der Anatas-Modifikation aufweist und die anorganischen Partikel von ähnlicher Größe wie das eingesetzte TiO₂ sind und wobei der Anteil an partikelförmigem, anorganischem Stoff im Additiv aus TiO₂ und partikelförmigem, anorganischem Stoff bis 80 Gew.-% beträgt.

19. Additiv nach Anspruch 18, **dadurch gekennzeichnet, dass** der partikelförmige, anorganische Stoffe aus BaSO₄, ZnS, Carbonaten, Phosphaten, Siliziumdioxid oder Silikaten oder aus Mischungen dieser Stoffe ausgewählt ist.

20. Additiv nach Anspruch 18 oder 19, **dadurch gekennzeichnet, dass** als partikelförmiger, anorganischer Stoff beschichtetes BaSO_{4,} Kreide oder Dolomit oder Talkum, Kaolin, Glimmer oder Mischungen dieser Stoffe ausgewählt werden.

21. Additiv nach einem der Ansprüche 18 bis 20, **dadurch gekennzeichnet, dass** das Gewichtsverhältnis von TiO₂ zum partikelförmigen, anorganischen Stoff in einem Bereich von 20 bis 95 Gew.-% für TiO₂ und 5 bis 80 Gew.-% für den partikelförmigen, anorganischen Stoff liegt.

22. Additiv nach einem der Ansprüche 18 bis 21, **dadurch gekennzeichnet, dass** das Gewichtsverhältnis von TiO₂ zum partikelförmigen, anorganischen Stoff bei 50 Gew.-% TiO₂ und 50 Gew.-% partikelförmigem, anorganischem Stoff liegt.

23. Additiv nach einem der Ansprüche 18 bis 21, **dadurch gekennzeichnet, dass** das Gewichtsverhältnis von TiO₂ zum partikelförmigen, anorganischen Stoff bei 33 Gew.-% TiO₂ und 67 Gew.-% partikelförmigem, anorganischem Stoff liegt.

24. Additiv nach einem der Ansprüche 18 bis 21, **dadurch gekennzeichnet, dass** das Gewichtsverhältnis von TiO₂ zum partikelförmigen, anorganischen Stoff im Additiv aus TiO₂ und partikelförmigem, anorganischem Stoff bei 25 Gew.-% TiO₂ und 75 Gew.-% partikelförmigem, anorganischem Stoff liegt.

## Claims

1. Polymer material, **characterized in that** it contains particulate TiO₂ and additionally at least one other particulate inorganic substance, wherein this particulate inorganic substance has a lower crystal hardness than TiO₂ in the anatase modification and the inorganic particles are of a similar size to that of the TiO₂ used and wherein the proportion of particulate inorganic substance in the additive consisting of TiO₂ and particulate inorganic substance is up to 80 wt.%.

2. Polymer material according to Claim 1, **characterized in that** the particulate inorganic substance is selected from BaSO₄, ZnS, carbonates, phosphates, silicon dioxide or silicates or mixtures of these substances.

3. Polymer material according to Claim 1 or 2, **characterized in that** coated BaSO₄, chalk or dolomite or talcum, kaolin, mica or mixtures of these substances are selected as the particulate inorganic substance.

4. Polymer material according to one of Claims 1 to 3, **characterized in that** the content of TiO₂ and particulate inorganic substance in the polymer material ranges from 0.1 to 20 wt.%, preferably from 0.1 to 10 wt.%.

5. Polymer material according to one of Claims 1 to 4, **characterized in that** the content of TiO₂ and particulate inorganic substance in the polymer material ranges from 0.1 to 5 wt.%.

6. Polymer material according to one of Claims 1 to 4, **characterized in that** the content of TiO₂ and particulate inorganic substance in the polymer material ranges from 0,15 to 0.5 wt.%.

7. Polymer material according to one of Claims 1 to 4, **characterized in that** the content of TiO₂ and particulate inorganic substance in the polymer material ranges from 0.5 to 3 wt.%.

8. Polymer material according to one of Claims 1 to 4, **characterized in that** the content of TiO₂ and particulate inorganic substance in the polymer material ranges from 0.1 to 8 wt.%, preferably from 0.4 to 5 wt.%.

9. Polymer material according to one of Claims 1 to 8, **characterized in that** the weight ratio of TiO₂ to particulate inorganic substance in the additive consisting of TiO₂ and particulate inorganic substance ranges from 20 to 95 wt.% for the TiO₂ and from 5 to 80 wt.% for the particulate inorganic substance.

10. Polymer material according to one of Claims 1 to 9, **characterized in that** the weight ratio of TiO₂ to particulate inorganic substance in the additive consisting of TiO₂ and particulate inorganic substance is 50 wt.% of TiO₂ and 50 wt.% of particulate inorganic substance.

11. Polymer material according to one of Claims 1 to 9, **characterized in that** the weight ratio of TiO₂ to particulate inorganic substance in the additive consisting of TiO₂ and particulate inorganic substance is 33 wt.% of TiO₂ and 67 wt.% of particulate inorganic substance.

12. Polymer material according to one of Claims 1 to 9, **characterized in that** the weight ratio of TiO₂ to particulate inorganic substance in the additive consisting of TiO₂ and particulate inorganic substance is 25 wt.% of TiO₂ and 75 wt.% of particulate inorganic substance.

13. Polymer material according to one of Claims 1 to 12 **characterized in that** it is selected from polyester (such as polyethylene terephthalate (PET), polytrimethylene terephthalate (PTT), polylactide (PLA)), polyamide (such as PA-6 or PA-6,6), polyolefin (such as polyethylene (PE) or polypropylene (PP)), polyacrylonitrile (PAN), viscose (CV) or cellulose acetate (CA).

14. Polymer material according to one of Claims 1 to 13, **characterized in that** it takes the form of synthetic fibres.

15. Polymer material according to one of Claims 1 to 13, **characterized in that** it takes the form of films or mouldings.

16. Process for the production of a polymer material according to one of Claims 1 to 16, **characterized in that** an additive consisting of TiO₂ and a particulate inorganic substance which has a lower hardness than anatase, the inorganic particles being of a similar size to that of the TiO₂ used, or, taken individually, TiO₂ and the inorganic substance which has a lower crystal hardness than anatase, the inorganic particles being of a similar size to that of the TiO₂ used, is/are introduced into the polymer material or its starting compounds in a known manner, before, during or after the polymerization reaction.

17. Process for the production of a polymer material according to one of Claims 1 to 16, **characterized in that** an additive consisting of TiO₂ and a particulate inorganic substance which has a lower hardness than anatase, or, taken individually, TiO₂ and the inorganic substance which has a lower crystal hardness than anatase is/are introduced into the starting compounds of the polymer material in a known manner.

18. Additive, **characterized in that** it contains particulate TiO₂ and at least one other particulate inorganic substance, wherein this particulate inorganic substance has a lower crystal hardness than TiO₂ in the anatase modification and the inorganic particles are of a similar size to that of the TiO₂ used and wherein the proportion of particulate inorganic substance in the additive consisting of TiO₂ and particulate inorganic substance is up to 80 wt.%.

19. Additive according to Claim 18, **characterized in that** the particulate inorganic substance is selected from BaSO₄, ZnS, carbonates, phosphates, silicon dioxide or silicates or mixtures of these substances.

20. Additive according to Claim 18 or 19, **characterized in that** coated BaSO₄, chalk or dolomite or talcum, kaolin, mica or mixtures of these substances are selected as the particulate inorganic substance.

21. Additive according to one of Claims 18 to 20, **characterized in that** the weight ratio of TiO₂ to particulate inorganic substance ranges from 20 to 95 wt.% for TiO₂ and from 5 to 80 wt.% for the particulate inorganic substance.

22. Additive according to one of Claims 18 to 21, **characterized in that** the weight ratio of TiO₂ to particulate inorganic substance is 50 wt.% of TiO₂ and 50 wt.% of particulate inorganic substance.

23. Additive according to one of Claims 18 to 21, **characterized in that** the weight ratio of TiO₂ to particulate inorganic substance is 33 wt.% of TiO₂ and 67 wt.% of particulate inorganic substance.

24. Additive according to one of Claims 18 to 21, **characterized in that** the weight ratio of TiO₂ to particulate inorganic substance in the additive consisting of TiO₂ and particulate inorganic substance is 25 wt.% of TiO₂ and 75 wt.% of particulate inorganic substance.

## Revendications

1. Matériau polymère, **caractérisé en ce qu'**il contient du dioxyde de titane en particules et, en plus, au moins une autre substance inorganique en particules, laquelle substance inorganique en particules présente, à l'état de cristal, une dureté plus faible que celle de la variété anatase du dioxyde de titane, lesquelles particules inorganiques ont une taille similaire à celle des particules de dioxyde de titane présentes, et laquelle substance inorganique sen particules représente une part valant jusqu'à 80 % du poids de l'adjuvant constitué du dioxyde de titane et de la substance inorganique en particules.

2. Matériau polymère conforme à la revendication 1, **caractérisé en ce que** la substance inorganique en particules a été choisie parmi les sulfate de baryum, sulfure de zinc, carbonates, phosphates, dioxyde de silicium et silicates et les mélanges de telles substances.

3. Matériau polymère conforme à la revendication 1 ou 2, **caractérisé en ce qu'**on a choisi, en tant que substance inorganique en particules, du sulfate de baryum revêtu, de la craie ou de la dolomite, ou encore du talc, du kaolin, du mica ou un mélange de ces substances.

4. Matériau polymère conforme à l'une des revendications 1 à 3, **caractérisé en ce que** la teneur du matériau polymère en dioxyde de titane et en substance inorganique en particules vaut de 0,1 à 20 % en poids, et de préférence de 0,1 à 10 % en poids.

5. Matériau polymère conforme à l'une des revendications 1 à 4, **caractérisé en ce que** la teneur du matériau polymère en dioxyde de titane et en substance inorganique en particules vaut de 0,1 à 5 % en poids.

6. Matériau polymère conforme à l'une des revendications 1 à 4, **caractérisé en ce que** la teneur du matériau polymère en dioxyde de titane et en substance inorganique en particules vaut de 0,15 à 0,5 % en poids.

7. Matériau polymère conforme à l'une des revendications 1 à 4, **caractérisé en ce que** la teneur du matériau polymère en dioxyde de titane et en substance inorganique en particules vaut de 0,5 à 3 % en poids.

8. Matériau polymère conforme à l'une des revendications 1 à 4, **caractérisé en ce que** la teneur du matériau polymère en dioxyde de titane et en substance inorganique en particules vaut de 0,1 à 8 % en poids, et de préférence de 0,4 à 5 % en poids.

9. Matériau polymère conforme à l'une des revendications 1 à 8, **caractérisé en ce que**, dans l'adjuvant constitué du dioxyde de titane et de la substance inorganique en particules, le dioxyde de titane et la substance inorganique en particules se trouvent en des proportions pondérales de 20 à 95 % de dioxyde de titane et de 5 à 80 % de substance inorganique en particules.

10. Matériau polymère conforme à l'une des revendications 1 à 9, **caractérisé en ce que**, dans l'adjuvant constitué du dioxyde de titane et de la substance inorganique en particules, le dioxyde de titane et la substance inorganique en particules se trouvent en des proportions pondérales d'environ 50 % de dioxyde de titane et d'environ 50 % de substance inorganique en particules.

11. Matériau polymère conforme à l'une des revendications 1 à 9, **caractérisé en ce que**, dans l'adjuvant constitué du dioxyde de titane et de la substance inorganique en particules, le dioxyde de titane et la substance inorganique en particules se trouvent en des proportions pondérales d'environ 33 % de dioxyde de titane et d'environ 67 % de substance inorganique en particules.

12. Matériau polymère conforme à l'une des revendications 1 à 9, **caractérisé en ce que**, dans l'adjuvant constitué du dioxyde de titane et de la substance inorganique en particules, le dioxyde de titane et la substance inorganique en particules se trouvent en des proportions pondérales d'environ 25 % de dioxyde de titane et d'environ 75 % de substance inorganique en particules.

13. Matériau polymère conforme à l'une des revendications 1 à 12, **caractérisé en ce que** le matériau polymère est choisi parmi les polyesters, tels les poly(éthylène téréphtalate) ou PET, poly(triméthylène téréphtalate) ou PTT et poly(acide lactique) ou PLA, les polyamides, tels le polyamide 6 et le polyamide 6-6, les polyoléfines, tels les polyéthylènes ou PE et polypropylène ou PP, le polyacrylonitrile ou PAN, la viscose ou CV, et l'acétate de cellulose ou CA.

14. Matériau polymère conforme à l'une des revendications 1 à 13, **caractérisé en ce que** le matériau polymère se présente sous la forme de fibres de synthèse.

15. Matériau polymère conforme à l'une des revendications 1 à 13, **caractérisé en ce que** le matériau polymère se présente sous la forme de films ou de pièces façonnées.

16. Procédé de préparation d'un matériau polymère conforme à l'une des revendications 1 à 15, **caractérisé en ce que** l'on ajoute de façon connue au matériau polymère ou aux produits de départ qui le donneront, avant, pendant ou après la réaction de polymérisation, soit un adjuvant constitué de dioxyde de titane et d'une substance inorganique en particules, qui présente une dureté plus faible que celle de l'anatase et dont les particules inorganiques ont une taille similaire à celle des particules de dioxyde de titane employées, soit, chacun à part, du dioxyde de titane et une telle substance inorganique qui présente à l'état de cristal une dureté plus faible que celle de l'anatase et dont les particules inorganiques ont une taille similaire à celle des particules de dioxyde de titane employées.

17. Procédé de préparation d'un matériau polymère conforme à l'une des revendications 1 à 15, **caractérisé en ce que** l'on ajoute de façon connue, aux produits de départ qui donneront le matériau polymère, soit un adjuvant constitué de dioxyde de titane et d'une substance inorganique en particules qui présente une dureté plus faible que celle de l'anatase, soit, chacun à part, du dioxyde de titane et une telle substance inorganique qui présente à l'état de cristal une dureté plus faible que celle de l'anatase.

18. Adjuvant, **caractérisé en ce qu'**il contient du dioxyde de titane en particules et au moins une autre substance inorganique en particules, laquelle substance inorganique en particules présente, à l'état de cristal, une dureté plus faible que celle de la variété anatase du dioxyde de titane, lesquelles particules inorganiques ont une taille similaire à celle des particules de dioxyde de titane présentes, et laquelle substance inorganique en particules représente une part valant jusqu'à 80 % du poids de l'adjuvant constitué du dioxyde de titane et de la substance inorganique en particules.

19. Adjuvant conforme à la revendication 18, **caractérisé en ce que** la substance inorganique en particules a été choisie parmi les sulfate de baryum, sulfure de zinc, carbonates, phosphates, dioxyde de silicium et silicates et les mélanges de telles substances.

20. Adjuvant conforme à la revendication 18 ou 19, **caractérisé en ce qu'**on a choisi, en tant que substance inorganique en particules, du sulfate de baryum revêtu, de la craie ou de la dolomite, ou encore du talc, du kaolin, du mica ou un mélange de ces substances.

21. Adjuvant conforme à l'une des revendications 18 à 20, **caractérisé en ce que** le dioxyde de titane et la substance inorganique en particules s'y trouvent en des proportions pondérales de 20 à 95 % de dioxyde de titane et de 5 à 80 % de substance inorganique en particules.

22. Adjuvant conforme à l'une des revendications 18 à 21, **caractérisé en ce que** le dioxyde de titane et la substance inorganique en particules s'y trouvent en des proportions pondérales d'environ 50 % de dioxyde de titane et d'environ 50 % de substance inorganique en particules.

23. Adjuvant conforme à l'une des revendications 18 à 21, **caractérisé en ce que** le dioxyde de titane et la substance inorganique en particules s'y trouvent en des proportions pondérales d'environ 33 % de dioxyde de titane et d'environ 67 % de substance inorganique en particules.

24. Adjuvant conforme à l'une des revendications 18 à 21, **caractérisé en ce que** le dioxyde de titane et la substance inorganique en particules s'y trouvent en des proportions pondérales d'environ 25 % de dioxyde de titane et d'environ 75 % de substance inorganique en particules.
